# EUROPEAN PATENT SPECIFICATION

(11) **EP 3 342 806 B1**
(45) Date of publication and mention of the grant of the patent: **23.09.2020**
(21) Application number: 16839240.5
(22) Date of filing: 22.08.2016
(51) Int. Cl.: C08J 7/04, C09D 5/02, C09D 133/16

(54) **METHOD FOR PRODUCING LIQUID REPELLENT MOLDED PRODUCT, AND LIQUID REPELLENT COMPOSITION**
HERSTELLUNGSVERFAHREN FÜR FLÜSSIGKEITSABWEISENDE FORM UND ZUSAMMENSETZUNG EINES FLÜSSIGKEITSABWEISENDEN MITTELS
PROCÉDÉ DE FABRICATION DE MOULE DÉPERLANT ET COMPOSITION D'AGENT DÉPERLANT

(30) Priority: 24.08.2015 JP 2015165116
(43) Date of publication of application: 04.07.2018
(73) Proprietor: AGC Inc., Tokyo 100-8405 (JP)
(72) Inventor: KAWANA, Junsuke, Tokyo 100-8405 (JP); TAKEMURA, Motohiro, Tokyo 100-8405 (JP); MORIMOTO, Eiji, Tokyo 100-8405 (JP); MASUDA, Sho, Tokyo 100-8405 (JP); FURUSAWA, Hiroki, Kyoto-shi Kyoto 615-8666 (JP)
(74) Representative: Müller-Boré & Partner Patentanwälte PartG mbB
(86) International application number: PCT/JP2016/074395
(87) International publication number: WO 2017/033893

(56) References cited:
- EP-A1- 3 009 488
- JP-A- H07 229 066
- JP-A- 2005 092 937
- JP-A- 2011 526 675
- JP-A- 2012 188 514
- JP-A- 2012 503 028
- US-A1- 2011 071 248
- US-A1- 2011 196 067
- US-A1- 2012 097 882
- US-A1- 2014 343 207
- US-A1- 2018 010 290

## Description

### TECHNICAL FIELD

The present invention relates to a method for producing a liquid repellent molded product, and a liquid repellent composition.

### BACKGROUND ART

As a material to impart water repellency and oil repellency to a substrate surface, a fluorinated water repellent employing a compound having a polyfluoroalkyl group, is used, by paying attention to the low surface tension of fluorine.

For example, Patent Document 1 discloses a water/oil repellent material obtained by applying a fluorinated curable composition comprising a fluorinated di(meth)acrylate having a perfluoro group with a specific structure, and a polyfunctional (meth)acrylate in a specific amount relative thereto, on a substrate such as a polyethylene terephthalate film, followed by curing to form a fluorinated coating film.

Patent Document 2 discloses a method for producing a retroreflective fabric, which comprises e.g. a step of applying a fluorinated water repellent composed mainly of a perfluoroalkyl acrylic acid ester, on a polyethylene film side of a laminate comprising a heat-resistant film and the polyethylene film.

In recent years, compounds containing perfluoroalkyl groups with 8 or more carbon atoms, are worried about bioaccumulation properties, and it is desired to develop a fluorinated water repellent containing only ones with at most 6 carbon atoms as perfluoroalkyl groups.

However, the perfluoroalkyl groups with at most 6 carbon atoms are generally inferior in liquid repellency as compared to perfluoroalkyl groups with 8 or more carbon atoms. The chain lengths of perfluoroalkyl groups used in Examples of Patent Documents 1 and 2 are 8 or more as the number of carbon atoms, and no Example is disclosed wherein sufficient liquid repellency is obtained by perfluoroalkyl groups with at most 6 carbon atoms.

Patent Document 3 discloses a method for applying, to a coating system involving transfer, a coating composition containing a polymer which has a perfluoroalkyl group with at most 6 carbon atoms and hydrophilic structural units and which further has a hydroxy group and/or carboxy group at its molecular chain terminals.

However, this technique requires hydrophilic structural units and hydrophilic molecular chain terminals as essential requirements, in order to uniformly apply (leveling) the coating composition to a plate and a substrate. They hinder liquid repellency itself or fixability to a film substrate, whereby liquid repellency and durability of the fluorinated coating film formed from the coating composition, cannot be expected. Further, in the amounts as described in Examples of Patent Document 3, liquid repellency by the perfluoroalkyl groups cannot be expected.

On the other hand, in recent years, reduction of volatile organic compounds (VOC) is desired, and also in the fluorinated water repellent, shift from a solvent type to an aqueous emulsion type or aqueous solution type is progressing.

However, an aqueous emulsion type or aqueous solution type fluorinated water repellent has a problem such that when applied to a resin molded product such as a film, it will be repelled since the surface tension of the resin molded product is low, and it is thus difficult to uniformly apply it.

In the above-mentioned Patent Document 2, as a fluorinated water repellent to be applied to a polyethylene film, an emulsion type one is also exemplified, but fluorinated water repellent agents which are used in Examples are solvent type. If the emulsion type fluorinated water repellent exemplified is applied to a polyethylene film, it is difficult to uniformly apply it, as described above.

Further, in Examples of Patent Document 2, the fluorinated water repellent is used as diluted with mineral turpentine, but if an aqueous emulsion is diluted with an organic solvent, a surfactant being used in order to let the active ingredients be water-dispersed, may become not to effectively function. Therefore, usually, an aqueous emulsion may not be diluted with an organic solvent.

### PRIOR ART DOCUMENTS

### PATENT DOCUMENTS

Patent Document 1: JP-A-8-239430
Patent Document 2: JP-A-9-66577
Patent Document 3: JP-A-2002-249706

### DISCLOSURE OF INVENTION

### TECHNICAL PROBLEM

An object of the present invention is to provide a method for producing a liquid repellent molded product, whereby it is possible to uniformly apply, on the surface of a resin molded product, a liquid repellent composition containing a fluorinated copolymer having a perfluoroalkyl group with at most 6 carbon atoms, and to obtain a liquid repellent molded product having excellent liquid repellency.

Another object of the present invention is to provide a liquid repellent composition which contains a fluorinated copolymer having a perfluoroalkyl group with at most 6 carbon atoms and which can be uniformly applied on the surface of a resin molded product, to obtain a liquid repellent molded product which is excellent in liquid repellency.

### SOLUTION TO PROBLEM

The present invention has the following embodiments.
<1> A method for producing a liquid repellent molded product, which comprises applying a liquid repellent composition comprising a fluorinated copolymer having structural units based on a monomer having a C₄₋₆ perfluoroalkyl group, water and a C₁₋₄ alcohol, to a resin molded product, and which is characterized in that
   the content of the alcohol is from 70 to 99.9 mass% based on 100 mass% of the liquid repellent composition, and
   the application amount of the liquid repellent composition to the resin molded product is from 0.001 to 0.2 g/m² as the amount of fluorine atoms.
<2> The method for producing a liquid repellent molded product according to <1>, wherein the mass ratio of the alcohol to water (the alcohol/water) is from 2 to 2,000.
<3> The method for producing a liquid repellent molded product according to <1> or <2>, wherein as the alcohol, at least one member selected from the group consisting of methanol, ethanol, 1-propanol and 2-propanol, is contained.
<4> The method for producing a liquid repellent molded product according to any one of <1> to <3>, wherein the mass ratio of the alcohol to fluorine atoms (the alcohol/fluorine atoms) in the liquid repellent composition is from 15 to 10,000.
<5> The method for producing a liquid repellent molded product according to any one of <1> to <4>, wherein the content of the fluorinated copolymer is at least 0.008 mass% based on 100 mass% of the liquid repellent composition.
<6> The method for producing a liquid repellent molded product according to any one of <1> to <5>, wherein the liquid repellent composition is prepared by diluting an aqueous liquid having the fluorinated copolymer dispersed or dissolved in an aqueous medium containing water, with a dilution medium containing the alcohol.
<7> The method for producing a liquid repellent molded product according to any one of <1> to <6>, wherein the monomer is an acrylate, a methacrylate or an acrylate with its α-position substituted by a halogen atom, which has the above-mentioned perfluoroalkyl group.
<8> The method for producing a liquid repellent molded product according to any one of <1> to <7>, wherein the monomer is a compound represented by the following formula (4):

   R^{F}-(CH₂)ₚOC(O)CR=CH₂ (4)

   wherein R^{F} is a C₄₋₆ perfluoroalkyl group, p is an integer of from 1 to 4, and R is a hydrogen atom, a methyl group or a chlorine atom.
<9> The method for producing a liquid repellent molded product according to any one of <1> to <8>, wherein the resin molded product is a polypropylene film or a polyethylene film.
<10> A liquid repellent composition comprising a fluorinated copolymer having structural units based on a monomer having a C₄₋₆ perfluoroalkyl group, water and a C₁₋₄ alcohol, characterized in that the content of the alcohol is from 70 to 99.9 mass%, based on 100 mass% of the liquid repellent composition.
<11> The liquid repellent composition according to <10>, wherein the mass ratio of the alcohol to water (the alcohol/water) is from 2 to 2,000.
<12> The liquid repellent composition according to <10> or <11>, wherein the mass ratio of the alcohol to fluorine atoms (the alcohol/fluorine atoms) in the liquid repellent composition is from 15 to 10,000.
<13> The liquid repellent composition according to any one of <10> to <12>, wherein the content of the fluorinated copolymer is at least 0.008 mass% based on 100 mass% of the liquid repellent composition.
<14> The liquid repellent composition according to any one of <10> to <13>, wherein the monomer is an acrylate, a methacrylate or an acrylate with its α-position substituted by a halogen atom, which has the above-mentioned perfluoroalkyl group.
<15> A method for producing the liquid repellent composition as defined in any one of <10> to <14>, characterized by diluting an aqueous liquid having the fluorinated copolymer dispersed or dissolved in an aqueous medium containing water, with a dilution medium containing the alcohol.

### ADVANTAGEOUS EFFECTS OF INVENTION

According to the method for producing a liquid repellent molded product of the present invention, it is possible to uniformly apply a liquid repellent composition containing a fluorinated copolymer having a perfluoroalkyl group with at most 6 carbon atoms on the surface of a resin molded product, and to produce a liquid repellent molded product having excellent liquid repellency.

The liquid repellent composition of the present invention can be uniformly applied to the surface of a resin molded product. Further, the liquid repellent molded product obtained by applying the liquid repellent composition of the present invention is excellent in liquid repellency.

### DESCRIPTION OF EMBODIMENTS

The meanings of the following terms in this specification are as follows.

A "monomer having a C₄₋₆ perfluoroalkyl group" is meant for a monomer having a "perfluoroalkyl moiety" in the chemical structure of the monomer, wherein the number of carbon atoms in the perfluoroalkyl moiety is from 4 to 6.

A "(meth)acrylate" is a general term for an acrylate and a methacrylate.

A "(meth)acryloyl group" is a general term for an acryloyl group and a methacryloyl group.

In this specification, a compound represented by the formula (1) may be referred to also as a compound (1). Compounds represented by other formulae may also be referred to in the same manner.

In this specification, a group represented by the formula (2) may be referred to also as a group (2). Groups represented by other formulae may also be referred to in the same manner.

The method for producing a liquid repellent molded product of the present invention is a method for producing a liquid repellent molded product, which comprises applying a liquid repellent composition comprising a fluorinated copolymer having structural units based on a monomer having a C₄₋₆ perfluoroalkyl group, water and a C₁₋₄ alcohol, to a resin molded product, and which is characterized in that
the content of the alcohol (C) is from 70 to 99.9 mass% based on 100 mass% of the liquid repellent composition, and
the application amount of the liquid repellent composition to the resin molded product is from 0.001 to 0.2 g/m² as the amount of fluorine atoms.

Hereinafter, a "monomer having a C₄₋₆ perfluoroalkyl group" will be referred to also as a "monomer (a)"; a "fluorinated copolymer having structural units based on a monomer (a)" will be referred to also as a "copolymer (A)", and a "C₁₋₄ alcohol" will be referred to also as an "alcohol (C)".

### <Liquid repellent composition>

The liquid repellent composition of the present invention comprises a copolymer (A), water and an alcohol (C).

The liquid repellent composition may further contain, as the case requires, components other than the copolymer (A), water and the alcohol (C). As such other components, for example, organic solvents other than the alcohol (C), surfactants, additives, etc. may be mentioned.

The liquid repellent composition is an aqueous liquid having a copolymer (A) dispersed or dissolved in an aqueous medium comprising water and an alcohol (C). The aqueous liquid may be an aqueous emulsion.

### (Copolymer (A))

The copolymer (A) has structural units based on a monomer having a C₄₋₆ perfluoroalkyl group. Hereinafter, structural units based on the monomer (a) will be referred to also as "units (a)".

In the copolymer (A), the content of units (a) is preferably from 30 to 100 mass%, more preferably from 30 to 80 mass%, based on the total of all structural units. When the content of units (a) is at least the lower limit value in the above range, the liquid repellency (water repellency, oil repellency) of the liquid repellent molded product will be more excellent.

The proportion of the structural units based on a monomer is obtainable from the NMR analysis and elemental analysis. Otherwise, it may be calculated on the basis of the charged amount of the monomer during the production of the copolymer (A).

From the viewpoint of dispersibility or solubility in an aqueous medium, it is preferred that the copolymer (A) further has structural units based on a monomer other than the monomer (a).

As the monomer other than the monomer (a), the following monomers (b), (c), (d), (e) and (f) may, for example, be mentioned. Hereinafter, structural units based on monomer (b) will be referred to also as "units (b)", and in the same manner, the names of structural units based on other monomers will be presented by attaching the same symbols as the monomer names to "units".

Structural units based on such other monomers to be contained in the copolymer (A) may be of one type or of two or more types.

### Monomer (a):

Monomer (a) is a monomer having a C₄₋₆ perfluoroalkyl group. That is, it is a compound having a C₄₋₆ perfluoroalkyl group and a polymerizable unsaturated group.

Hereinafter, a perfluoroalkyl group may be referred to also as an "R^{F} group".

The R^{F} group may be linear or branched, but is preferably linear.

The R^{F} group which the monomer (a) has, may be of one type, or of two or more types.

The polymerizable unsaturated group may, for example, be -CR=CH₂, -C(O)OCR=CH₂, -OC(O)CR=CH₂, -OCH₂-φ-CR=CH₂, -OCH= CH₂, etc.

Here, R is a hydrogen atom, a methyl group or a halogen atom, and φ is a phenylene group. As R, a hydrogen atom, a methyl group or a chlorine atom is preferred.

As the polymerizable unsaturated group, -OC(O)CR=CH₂ is preferred.

The polymerizable unsaturated group which the monomer (a) has, may be of one type, or of two or more types.

As the monomer (a), a compound (1) is preferred.

(Z-Y)ₙX (1).

Z is a C₄₋₆ R^{F} group or a group (2).

CᵢF₂ᵢ₊₁O(CFX¹CF₂O)ⱼCFX²- (2).

Here, i is an integer of from 4 to 6, j is an integer of from 0 to 10, and X¹ and X² are each independently a fluorine atom or a trifluoromethyl group.

As Z, the following groups may be mentioned.
F(CF2)4-,
F(CF₂)₅-,
F(CF₂)₆-,
(CF₃)₂CF(CF₂)₂-,
CₖF₂ₖ₊₁O[CF(CF₃)CF₂O]ₕ-CF(CF₃)-.

Here, k is an integer of from 1 to 6, and h is an integer of from 0 to 10.

Y is a divalent organic group having no fluorine atom, or a single bond.

The divalent organic group is preferably an alkylene group. The alkylene group may be linear or branched. The alkylene group may have -O-, -NH-, -CO-, -SO₂-, -S-, -CD¹=CD²- (wherein D¹ and D² are each a hydrogen atom or a methyl group), etc.

As Y, the following groups may be mentioned.
- CH₂-,
- CH₂CH₂-,
- (CH2)3-,
- CH₂CH₂CH(CH₃)-,
- CH=CH-CH₂-,
- S-CH₂CH₂-,
- SO₂-CH₂CH₂-,
- CH₂CH₂CH₂-S-CH₂CH₂-,
- CH₂CH₂CH₂-SO₂-CH₂CH₂-.

As Y, a C₁₋₄ straight-chain alkylene group such as -CH₂CH₂- is preferred.

n is 1 or 2.

X is, when n is 1, any one of group (3-1) to group (3-5), and when n is 2, any one of group (4-1) to group (4-4).

-CR=CH₂ (3-1),

-C(O)OCR=CH₂ (3-2),

-OC(O)CR=CH₂ (3-3),

-OCH₂-φ-CR=CH₂ (3-4),

-OCH=CH₂ (3-5).

Here, R is a hydrogen atom, a methyl group or a halogen atom, and φ is a phenylene group. As R, a hydrogen atom, a methyl group or a chlorine atom is preferred.

-CH[-(CH2)mCR=CH2]- (4-1),

-CH[-(CH₂)ₘC(O)OCR=CH₂]- (4-2),

-CH[-(CH₂)ₘOC(O)CR=CH₂)- (4-3),

-OC(O)CH=CHC(O)O- (4-4).

Here, R is a hydrogen atom, a methyl group or a halogen atom, and m is an integer of from 0 to 4. As R, a hydrogen atom, a methyl group or a chlorine atom is preferred.

From the viewpoint of the polymerizability with other monomers, the flexibility of a coating film of the copolymer (A), the adhesion of the copolymer (A) to the resin molded product, the dispersibility or solubility in an aqueous medium, easiness of the emulsion polymerization, etc., the monomer (a) is preferably an acrylate having a C₄₋₆ R^{F} group wherein the α-position may be optionally substituted by a methyl group or a halogen atom.

Such an acrylate may, for example, be a compound of the above formula (1) wherein Z is a C₄₋₆ R^{F} group, Y is a C₁₋₄ alkylene group, n is 1, X is a group (3-3), and R is a hydrogen atom, a methyl group or a chlorine atom. Particularly preferred is the following compound (4). Here, in the compound (4), R^{F} is a C₄₋₆ perfluoroalkyl group, p is an integer of from 1 to 4, and R is a hydrogen atom, a methyl group or a chlorine atom.

R^{F}-(CH₂)ₚOC(O)CR=CH₂ (4)

As preferred examples of the monomer (a), the following ones may be mentioned.
C₆F₁₃C₂H₄OCOC(CH₃)=CH₂,
C₆F₁₃C₂H₄OCOCH=CH₂,
C₆F₁₃C₂H₄OCOCCl=CH₂,
C₄F₉C₂H₄OCOC(CH₃)=CH2,
C₄F₉C₂H₄OCOCH=CH₂,
C₄F₉C₂H₄OCOCCl=CH₂.

### Monomer (b):

Monomer (b) is a monomer having a hydrophilic group.

The hydrophilic group may, for example, be an acid group such as a carboxy group, a phosphoric acid group or a sulfonic acid group, or its neutralized group, a basic group such as a primary amino group, a secondary amino group, a tertiary amino group or a nitrogen-containing heterocyclic group, or its neutralized group, a hydroxy group, a (poly)oxyalkylene group, etc. As the secondary amino group, a monoalkylamino group is preferred, and as the tertiary amino group, a dialkylamino group is preferred, and as the alkyl group in these groups, an alkyl group with at most 4 carbon atoms is preferred. The nitrogen-containing heterocyclic group may, for example, be a morpholino group, a piperidino group, a pyrrolidinyl group, an aziridinyl group, etc. To the nitrogen-containing heterocyclic ring, a substituent such as =O or an alkyl group, may be bonded. A (poly)oxyalkylene group is a general term for an oxyalkylene group and a poly(oxyalkylene) chain. The number of carbon atoms in the alkylene group in the (poly)oxyalkylene group is preferably from 2 to 4.

The monomer (b) may, for example, be the following compound (b1), the following compound (b2), the following compound (b3), N-vinylpyrrolidone, N-vinylcarbazole, maleimide, N-methylmaleimide, (meth)acrylamide, N,N-dimethyl (meth)acrylamide, diacetone (meth)acrylamide, methylolated diacetone (meth)acrylamide, a monomer having a carboxy group, etc.

In a case where the monomer (b) is a derivative of an alcohol having a hydrophilic group such as a methacrylate, the group having a hydrophilic group is preferably a group represented by X-R¹⁰-. Here, X represent a monovalent hydrophilic group such as a carboxy group, a tertiary amino group, a hydroxy group, etc., and R¹⁰ represents a C₁₋₆ alkylene group.

CH₂=CR¹-G-(R²O)_{q}-R³ (b1)

CH₂=CR⁴⁻M-Q-NR⁵R⁶ (b2)

CH₂=CR⁴⁻M-Q-N(O)R⁵R⁶ (b3)

Here, R¹ is a hydrogen atom or a methyl group, R² is a C₂₋₄ alkylene group, or a C₂₋₃ alkylene group having some or all of hydrogen atoms are substituted by hydroxy groups, q is an integer of from 1 to 50, G is -COO(CH₂)ᵣ- or -COO(CH₂)ₜ-NHCOO- (r is an integer of from 0 to 4, and t is an integer of from 1 to 4), and R³ is a hydrogen atom, a methyl group, a (meth)acryloyl group or an allyl group.

R⁴ is a hydrogen atom or a methyl group, M is -COO- or -CONH-, Q is a C₂₋₄ alkylene group, or a C₂₋₃ alkylene group having some or all of the hydrogen atoms substituted by hydroxy groups, R⁵ and R⁶ are each independently, a benzyl group, a C₁₋₈ alkyl group, or a C₂₋₃ alkyl group having some of hydrogen atoms substituted by hydroxy groups, or R⁵ and R⁶ are bonded to form a nitrogen-containing heterocyclic group together with the nitrogen atom to which they are bonded.

In the compound (b1), when q is 2 or more, alkylene groups different in the number of carbon atoms may be contained in -(R²O)_{q}-. In a case where alkylene groups different in the number of carbon atoms are contained as -(R²O)_{q}-, the sequence of their repeating units may be in a random form or in a block form.

As R², a C₂₋₄ alkylene group is preferred.

As q, an integer of from 1 to 30 is preferred, and an integer of from 1 to 15 is more preferred.

As G, -COO(CH₂)ᵣ- (r is an integer of from 0 to 4) is preferred.

As R³, a hydrogen atom or a (meth)acryloyl group is preferred. When R³ is a (meth)acryloyl group, the copolymer (A) tends to readily have a three-dimensional network structure, and the copolymer (A) will be firmly adhered to the resin molded product and will be excellent in durability.

As the compound (b1), the following compounds are preferred.

2-Hydroxyethyl (meth)acrylate, 2-hydroxypropyl (meth)acrylate, 2-hydroxybutyl (meth)acrylate, 4-hydroxybutyl (meth)acrylate.

Polyethylene glycol mono(meth)acrylate, methoxy polyethylene glycol (meth)acrylate, polyethylene glycol di(meth)acrylate.

Polypropylene glycol mono(meth) acrylate, methoxy polypropylene glycol (meth)acrylate, polypropylene glycol di(meth)acrylate, polybutylene glycol mono(meth)acrylate, methoxy polybutylene glycol (meth)acrylate, polybutylene glycol di(meth)acrylate.

Triethylene glycol di(meth)acrylate, tetraethylene glycol di(meth)acrylate, 2-acryloyloxyethyl (meth)acrylate, 2-hydroxy-3-acryloyloxy propyl (meth)acrylate, poly(oxyethylene-oxypropylene) diol mono(meth) acrylate, poly(oxyethylene-oxypropylene) diol di(meth) acrylate, poly(oxyethylene-oxybutylene) diol mono(meth)acrylate, poly(oxyethylene-oxybutylene) diol di(meth)acrylate.

In the compound (b2) or the compound (b3), M may be -COO- (ester bond) or -CONH- (amide bond), and -COO- is preferred.

As Q, a C₂₋₄ alkylene group is preferred.

Each of R⁵ and R⁶ is preferably a C₁₋₈ alkyl group.

As the nitrogen-containing heterocyclic ring to be formed by bonding of R⁵ and R⁶, a morpholino group, a piperidino group, a pyrrolidinyl group, an aziridinyl group, etc. may be mentioned.

As the compound (b2), N,N-dimethylaminoethyl (meth)acrylate, N,N-diethylamino ethyl (meth)acrylate, N,N-dimethylaminopropyl (meth)acrylate, N,N-diethylaminopropyl (meth)acrylate, N,N-diisopropyl-aminoethyl (meth)acrylate, N,N-diethylaminopropyl (meth)acrylamide, N-(meth)acryloyl morpholine, N-(meth)acryloyl piperidine or aziridinylethyl (meth)acrylate is preferred, and N,N-dimethylaminoethyl methacrylate or N,N-diethylaminoethyl methacrylate is more preferred.

As the compound (b3), N,N-dimethylamino oxide ethyl (meth)acrylate is preferred.

The monomer having a carboxy group may, for example, be an unsaturated monocarboxylic acid, an unsaturated polycarboxylic acid, etc., and the compound (b4) is preferred.

CH₂=C(R⁷)-Q-COOH (b4).

Here, R⁷ is a hydrogen atom, a halogen atom, a C₁₋₃ alkyl group or a carboxy group. Q is -C(=O)-O- or a C₁₋₆ divalent chain hydrocarbon group.

As the compound (b4), acrylic acid, methacrylic acid, itaconic acid, etc. is preferred.

As the monomer (b), 2-hydroxyethyl (meth)acrylate, polyethylene glycol mono(meth)acrylate, polyethylene glycol di(meth)acrylate, N,N-diethylaminoethyl (meth)acrylate, acrylic acid, methacrylic acid or N-vinylpyrrolidone is preferred.

As the monomer (b), one type may be used alone, or two or more types in combination.

### Monomer (c):

Monomer (c) is a monomer other than the monomer (b), and a (meth)acrylate having at least one functional group selected from the group consisting of an isocyanate group, a blocked isocyanate group, a urethane bond, an alkoxysilyl group, an epoxy group, an N-methylol group and an N-alkoxymethyl group and having no R^{F} group.

When the copolymer (A) contains units (c), oil resistance, water resistance and water repellency of the liquid repellent molded product will be excellent.

As the monomer (c), the following compounds may be preferably mentioned.

A compound having an isocyanate group, and its oligomer:
2-isocyanate ethyl (meth)acrylate, 3-isocyanate propyl (meth)acrylate, 4-isocyanate butyl (meth)acrylate, or triallyl isocyanurate.

A compound having a blocked isocyanate group:
a 2-butanone oxime adduct of 2-isocyanatoethyl (meth)acrylate, a pyrazole adduct of 2-isocyanate ethyl (meth)acrylate, a 3,5-dimethylpyrazole adduct of 2-isocyanate ethyl (meth)acrylate, a 3-methylpyrazole adduct of 2-isocyanatoethyl (meth)acrylate, an ε-caprolactam adduct of 2-isocyanatoethyl (meth)acrylate, a 2-butanone oxime adduct of 3-isocyanate propyl (meth)acrylate, a pyrazole adduct of 3-isocyanate propyl (meth)acrylate, a 3,5-dimethylpyrazole adduct of 3-isocyanate propyl (meth)acrylate, a 3-methylpyrazole adduct of 3-isocyanate propyl (meth)acrylate, an ε-caprolactam adduct of 3-isocyanate propyl (meth)acrylate, a 2-butanone oxime adduct of 4-isocyanate butyl (meth)acrylate, a pyrazole adduct of 4-isocyanate butyl (meth)acrylate, a 3,5-dimethylpyrazole adduct of 4-isocyanate butyl (meth)acrylate, a 3-methylpyrazole adduct of 4-isocyanate butyl (meth)acrylate, or an ε-caprolactam adduct of 4-isocyanate butyl (meth)acrylate.

A compound having a urethane bond:
a tolylene diisocyanate adduct of 3-phenoxy-2-hydroxypropyl acrylate, a hexamethylene diisocyanate adduct of 3-phenoxy-2-hydroxypropyl acrylate, or a hexamethylene diisocyanate adduct of pentaerythritol triacrylate.

An alkoxysilyl compound:
a compound represented by CH₂=CR¹⁰-D-E-SiR^{a}R^{b}R^{c} (wherein D is -OCO-, -COO- or a single bond, E is a C₁₋₄ alkylene group, R^{a} is an alkoxy group, R^{b} and R^{c} are each independently a C₁₋₆ alkyl group or a C₁₋₆ alkoxy group, and R¹⁰ is a hydrogen atom or a methyl group).

Specific examples include 3-methacryloyloxypropyl trimethoxysilane, 3-methacryloyloxypropyl dimethoxy methyl silane, 3-methacryloyloxypropyl triethoxysilane, 3-methacryloyloxy propyl diethoxyethyl silane, vinyl trimethoxysilane, etc.

A compound having an epoxy group:
glycidyl (meth)acrylate, or a polyoxyalkylene glycol monoglycidyl ether (meth)acrylate.

A compound having an N-methylol group or N-alkoxymethyl group:
N-methylol (meth)acrylamide, N-methoxymethyl (meth)acrylamide, N-ethoxymethyl (meth)acrylamide, or N-butoxymethyl (meth)acrylamide.

As the monomer (c), a 3,5-dimethylpyrazole adduct of 2-isocyanatoethyl (meth)acrylate, 3-methacryloyloxypropyl trimethoxy silane, 3-methacryloyloxypropyl dimethoxy methyl silane, 3-methacryloyloxypropyl triethoxysilane, or 3-methacryloyloxy propyl diethoxyethyl silane is preferred.

As the monomer (c), one type may be used alone, or two or more types may be used in combination.

### Monomer (d):

Monomer (d) is a chlorinated olefin.

When the copolymer (A) contains units (d), the adhesion of the copolymer (A) to the resin molded product will be improved, and the durability will be further improved.

As the monomer (d), for example, vinyl chloride or vinylidene chloride may be mentioned.

### Monomer (e):

Monomer (e) is a (meth)acrylate having no R^{F} group and having a C₁₈₋₃₀ alkyl group.

When the number of carbon atoms in the alkyl group is at least the above lower limit value, the durability of a liquid repellent molded product obtainable by using the liquid repellent composition will be good, and deterioration in the liquid repellency at the time of using the liquid repellent molded product will be less likely to occur. When the number of carbon atoms in the alkyl group is at most the above upper limit value, handling in the polymerization operation will be easy, and it is possible to obtain the copolymer (A) in good yield.

The alkyl group may be linear or branched, but is preferably linear.

The number of carbon atoms in the alkyl group is more preferably from 20 to 24.

As the monomer (e), stearyl (meth)acrylate or behenyl (meth)acrylate is preferred.

### Monomer (f):

Monomer (f) is a monomer other than the monomer (a), the monomer (b), the monomer (c), the monomer (d) and the monomer (e).

As the monomer (f), the following compounds may be mentioned.

(Meth)acrylates: methyl (meth)acrylate, ethyl (meth)acrylate, propyl (meth)acrylate, n-butyl (meth)methacrylate, t-butyl (meth)methacrylate, i-butyl (meth)acrylate, cyclohexyl (meth)acrylate, 2-ethylhexyl (meth)acrylate, n-hexyl (meth)acrylate, benzyl (meth)acrylate, octyl (meth)acrylate, decyl methacrylate, 3-ethoxypropyl acrylate, methoxy-butyl acrylate, 2-ethylbutyl acrylate, 1,3-dimethylbutyl acrylate, 2-methylpentyl acrylate, isobornyl (meth)acrylate, dicyclopentanyl (meth)acrylate, dicyclopentenyl (meth)acrylate, 2-ethylhexyl polyoxyalkylene (meth)acrylate, benzyl (meth)acrylate, etc.

Vinyl ethers: an alkyl vinyl ether (methyl vinyl ether, ethyl vinyl ether, n-propyl vinyl ether, isopropyl vinyl ether, n-butyl vinyl ether, isobutyl vinyl ether, pentyl vinyl ether, 2-ethylhexyl vinyl ether, octadecyl vinyl ether, cetyl vinyl ether, etc.), a cycloalkyl vinyl ether (cyclohexyl vinyl ether, etc.), a halogenated alkyl vinyl ether (2-chloroethyl vinyl ether, etc.), etc.

Vinyl esters: vinyl acetate, vinyl propionate, vinyl isobutanoate, vinyl isodecanoate, vinyl stearate, etc.

Olefins: ethylene, propylene, isoprene, butene, 1,4-butadiene, 1,3-butadiene, pentene, 2-methyl-1-butene, 1-hexene, cyclohexyl-1-pentene, 1-dodecene, 1-tetradecene, 2-methylpentene, 2,2-dimethyl-pentene, 2-methoxy propylene, styrene, α-methyl styrene, p-methyl styrene, hexyl styrene, octyl styrene, nonyl styrene, etc.

Halogenated olefins (but excluding the monomer (a) and the monomer (d)): tetrafluoroethylene, hexafluoropropylene, chlorotrifluoroethylene, vinylidene fluoride, etc.

Unsaturated carboxylic acid esters other than (meth)acrylates: an alkyl crotonate, an alkyl ester of maleic acid, such as diethyl maleate, dipropyl maleate or dioctyl maleate, an alkyl ester of fumaric acid, such as diethyl fumarate or dipropyl fumarate, a citraconic acid alkyl ester, a mesaconic acid alkyl ester, etc.

Monomers other than the above: allyl acetate, an alkyl vinyl ketone, butadiene, isoprene, chloroprene, etc.

From the viewpoint of liquid repellency, the copolymer (A) is preferably at least one member selected from the group consisting of the following copolymer (A1) and copolymer (A2). The following proportions of units are proportions to the total amount of all units which the copolymer has.

Copolymer (A1): a copolymer having from 50 mass% to 90 mass% of units (a), more than 0 mass% to 50 mass% (preferably from 0.1 mass% to 50 mass%) of units (b).

Copolymer (A2): a copolymer having from 50 mass% to 90 mass% of units (a), and more than 0 mass% to 20 mass% (preferably from 0.1 mass% to 10 mass%) of units (b), more than 0 mass% to 10 mass% (preferably from 1 mass% to 7 mass%) of units (c), more than 0 mass% to 30 mass% (preferably from 1 mass% to 20 mass%) of units (d), and more than 0 mass% to 20 mass% (preferably from 1 mass% to 15 mass%) of units (e).

The copolymer (A1) is preferably in the form of a solution or dispersion.

The copolymer (A1) may further have at least one type of units selected from the group consisting of the units (c), the units (d), the units (e) and the units (f).

The copolymer (A2) is preferably in the form of an emulsion.

The copolymer (A2) may further have at least one type of units selected from the group consisting of the units (b) and the units (f).

The mass average molecular weight (Mw) of the copolymer (A) is preferably from 8,000 to 500,000, more preferably from 10,000 to 400,000. When the mass average molecular weight (Mw) of the copolymer is within the above range, it is possible to express both water repellency and oil repellency.

The number average molecular weight (Mn) of the copolymer (A) is preferably from 3,000 to 200,000, more preferably from 5,000 to 180,000. When the number average molecular weight (Mn) of the copolymer is within the above range, it is possible to express both water repellency and oil repellency.

The mass average molecular weight (Mw) and number average molecular weight (Mn) of the copolymer (A) are, respectively, the molecular weights calculated as polystyrene measured by gel permeation chromatography (GPC).

### (Alcohol (C))

The number of carbon atoms in the alcohol (C) is from 1 to 4, preferably from 1 to 3, more preferably 1 or 2.

The alcohol (C) may be a monohydric alcohol or a polyhydric alcohol.

Specific examples of the alcohol (C) include methanol, ethanol, 1-propanol, 2-propanol, 2-butanol, t-butanol, ethylene glycol, propylene glycol, butylene glycol, and glycerin. Any one of these may be used alone, or two or more of them may be used in combination.

As the alcohol (C) to be contained in the liquid repellent composition, from the viewpoint of the stability when mixed with an aqueous solution, the cost, etc., at least one member selected from the group consisting of methanol, ethanol, 1-propanol and 2-propanol is preferred, and at least one member selected from the group consisting of methanol, ethanol and 1-propanol is more preferred.

### (Other organic solvents)

As organic solvents other than alcohol (C), water-soluble organic solvents are preferred, and for example, 3-methoxymethyl-butanol, dipropylene glycol, dipropylene glycol monomethyl ether, tripropylene glycol, N-methylpyrrolidone, hexylene glycol and methyl ethyl ketone may be mentioned. One of these may be used alone, or two or more of them may be used in combination.

As other organic solvents, those used to improve the dispersibility of the monomers in an aqueous liquid during emulsion polymerization in the case of producing the copolymer (A) by emulsion polymerization in an aqueous medium, and to improve the dispersibility of the formed copolymer (A) to improve the productivity, may be contained as they are.

### (Surfactant)

The surfactant is used in order to let the copolymer (A) be stably dispersed in an aqueous medium.

In a case where an emulsion of the copolymer (A) is to be produced by emulsion polymerization in an aqueous medium of a monomer mixture containing the monomer (a), usually a surfactant is incorporated in an aqueous medium to be used in the emulsion polymerization. In such a case, at least a part of the surfactant contained in the aqueous liquid (I) as described later, is the surfactant that is used at the time of this polymerization. Further, it is also possible to further blend a surfactant to the emulsion obtained by the emulsion polymerization.

As the surfactant, a hydrocarbon surfactant or a fluorinated surfactant may be mentioned, and each of them may be an anionic surfactant, a nonionic surfactant, a cationic surfactant, or an amphoteric surfactant.

As nonionic surfactants, surfactants s¹ to s⁸ described in WO2012/147700 may, for example, be mentioned.

In a case where the surfactant contains a cationic surfactant, as such a cationic surfactant, surfactant s⁷ described in WO2012/147700 may, for example, be mentioned.

In a case where the surfactant contains an amphoteric surfactant, as such an amphoteric surfactant, surfactant s⁸ described in WO2012/147700 may, for example, be mentioned.

Further, as the surfactant, surfactant s⁹ (polymer surfactant) described in WO2012/147700 may be used.

Preferred embodiments of the surfactant are the same as the preferred embodiments described in WO2012/147700.

In a case where the liquid repellent composition is prepared by diluting an emulsion having the copolymer (A) dispersed in an aqueous medium containing water, by a dilution medium containing an alcohol (C), it is preferred that the emulsion and the liquid repellent composition, respectively, contain a surfactant. In such a case, the surfactant is preferably composed solely of a non-ionic surfactant, in that the action of the surfactant is less likely to be impaired when diluted with the dilution medium.

### (Additives)

Additives may, for example, be a crosslinking agent, a polymer other than the copolymer (A), an antifoaming agent, etc. The polymer other than the copolymer (A) may, for example, be polyvinyl alcohol, starch, etc.

### (Composition)

In the liquid repellent composition, the content of the alcohol (C) is from 70 to 99.9 mass%, preferably from 70 to 99.7 mass%, more preferably from 70 to 99.5 mass%, further preferably from 70 to 90 mass%, based on 100 mass% of the liquid repellent composition. When the content of the alcohol (C) is at least the lower limit value in the above range, the liquid repellent composition can be uniformly applied on the surface of the resin molded product, and it is possible to obtain a liquid repellent molded product excellent in liquid repellency. When the content of the alcohol (C) is at most the upper limit value in the above range, it is possible to let a sufficient amount of the copolymer (A) be contained.

The content of water is preferably such an amount that the mass ratio of the alcohol (C) to water (the alcohol (C)/water) in the liquid repellent composition becomes to be within a range of from 2 to 2,000. The alcohol (C)/water is preferably from 2.2 to 1,900, more preferably from 2.3 to 1,500, further preferably from 2.3 to 500, most preferably from 2.3 to 30. When the alcohol (C)/water in the liquid repellent composition is at least the lower limit value in the above range, the liquid repellent composition can be uniformly applied on the surface of the resin molded product, and it is possible to obtain a liquid repellent molded product excellent in liquid repellency. When the alcohol (C)/water is at most the upper limit value in the above range, it is possible to blend a sufficient amount of the copolymer (A) to express good liquid repellency.

The content of the copolymer (A) is preferably at least 0.008 mass%, more preferably from 0.008 to 20 mass%, further preferably from 0.01 to 10 mass %, particularly preferably from 0.01 to 8 mass%, most preferably from 0.01 to 5 mass%, based on 100 mass% of the liquid repellent composition. When the proportion of the copolymer (A) is at least the lower limit value in the above range, the amount of the liquid repellent composition required to bring the application amount of the liquid repellent composition to be within a range of from 0.001 to 0.2 g/m² as the amount of fluorine atoms, will not be excessive, and it will be easy to produce a liquid repellent molded product. When the proportion of the copolymer (A) is at least the lower limit value in the above range, the coating properties of the liquid repellent composition will be good.

The mass ratio of the alcohol (C) to fluorine atoms (the alcohol (C)/fluorine atoms) in the liquid repellent composition is preferably from 15 to 10,000, more preferably from 16 to 9,000, further preferably from 17 to 8,500, particularly preferably from 17 to 1,000, most preferably from 17 to 150. When the alcohol (C)/fluorine atoms is at least the lower limit value in the above range, a liquid repellent molded product having more excellent liquid repellency tends to be easily obtained. When the alcohol (C)/fluorine atoms is at most the upper limit value in the above range, the coating properties of the liquid repellent composition will be good.

The content of fluorine atoms in the liquid repellent composition can be adjusted by the content of the copolymer (A) in the liquid repellent composition, the amount of fluorine atoms in the copolymer (A), etc.

The content of fluorine atoms in the liquid repellent composition can be calculated from the solid content concentration in the liquid repellent composition, the mass proportion of the units (a) to the total solid content, the molecular structure of the units, etc. Otherwise, it can be obtained by analyzing the coating film formed from the liquid repellent composition by a known analytical method (e.g. the method disclosed in Analytical Chemistry Vol. 26 (1977), p.721).

In a case where the liquid repellent composition contains a surfactant, the content of the surfactant in the liquid repellent composition is preferably from 1 to 10 parts by mass, more preferably from 2 to 8 parts by mass, to 100 parts by mass of the copolymer (A).

### (Method for preparing liquid repellent composition)

The method for preparing the liquid repellent composition is not particularly limited.

A preferred method for preparing the liquid repellent composition may be a method of diluting an aqueous liquid (hereinafter referred to also as the "aqueous liquid (I)") having the copolymer (A) dispersed or dissolved in an aqueous medium containing water, by a dilution medium containing the alcohol (C).

To the aqueous liquid (I), as the case requires, components other than the copolymer (A) and the dilution medium, may be added in a range not to impair the effects of the present invention. As such other components, a surfactant, an additive, etc. may be mentioned. They may, respectively, be the same as described above, and preferred embodiments may also be the same.

### "Aqueous liquid (I)"

In the aqueous liquid (I), the aqueous medium contains at least water. The aqueous medium may be water, or a mixture of water and an organic solvent. The organic solvent may be the alcohol (C) or an organic solvent other than the alcohol (C). They may, respectively, be the same as mentioned above, and preferred embodiments may also be the same.

In a case where the aqueous medium is a mixture of water and an organic solvent, the content of the organic solvent is suitably set within such a range that it can be uniformly mixed with water. For example, in the case of a water-soluble organic solvent, it is preferably from 1 to 80 parts by mass, more preferably from 1 to 60 parts by mass, to 100 parts by mass of water.

The aqueous liquid (I) may have components other than the copolymer (A) dispersed or dissolved in an aqueous medium. Such other components may, for example, be a surfactant, an additive, etc. They may, respectively, be the same as described above, and preferred embodiments may also be the same.

The content of the copolymer (A) in the aqueous liquid (I) is preferably from 5 to 80 mass%, more preferably from 10 to 50 mass%, based on the total amount of the aqueous liquid (I). When the content of the copolymer (A) is at least the lower limit value in the above range, liquid repellency will be good, and when it is at most the upper limit value, stability will be good.

In a case where the aqueous liquid (I) contains a surfactant, the content of the surfactant in the aqueous liquid (I) is preferably from 1 to 10 parts by mass, more preferably from 2 to 8 parts by mass, to 100 parts by mass of the copolymer (A).

The solid content concentration in the aqueous liquid (I) is preferably from 5 to 80 mass%, more preferably from 10 to 50 mass%. The solid content concentration in the aqueous liquid (I) is calculated from the mass of the aqueous liquid (I) before heating and the mass after drying at 120°C for 4 hours in a convection dryer.

At least a part of the alcohol (C) in the liquid repellent composition prepared as described above, is derived from the dilution medium. In a case where the aqueous liquid (I) contains an alcohol (C), the content thereof will also be included in the content of the alcohol (C) in the repellent agent composition. Further, at least a part of the water is derived from the aqueous liquid (I). In a case where the diluent medium contains water, the content thereof will also be included in the content of water in the liquid repellent composition.

### "Method for producing aqueous liquid (I)"

The aqueous liquid (I) can be prepared, for example, by the following method (i), (ii) or (iii).
(i) A method of polymerizing monomer components including the monomer (a) in an aqueous medium in the presence of a polymerization initiator and, as the case requires, a surfactant, to obtain a solution, dispersion or emulsion of the copolymer (A), and as the case requires, adding other aqueous media, other surfactants, additives, etc.
(ii) A method of polymerizing monomer components including the monomer (a) in a medium in the presence of a polymerization initiator and, as the case requires, a surfactant, to obtain a solution, dispersion or emulsion of the copolymer (A), then, separating the copolymer (A), and adding to the copolymer (A) an aqueous medium and, as the case requires, a surfactant, additives, etc.
(iii) A method of conducting a solution polymerization in an organic solvent capable of dissolving monomer components including the monomer (a) and a polymerization initiator, then dispersing the formed copolymer (A) solution in an aqueous medium, and distilling off an organic solvent under reduced pressure.

As the polymerization method, a dispersion polymerization method, an emulsion polymerization method, a suspension polymerization method, a solution polymerization method, etc. may be mentioned.

In the case of an emulsion polymerization, with a view to improvement in the yield of the copolymer (A), it is preferred to pre-emulsify a mixture comprising monomers, a surfactant and an aqueous medium before the emulsion polymerization. The pre-emulsification may be carried out, for example, by mixing and dispersing the mixture comprising monomers, a surfactant and an aqueous medium by a homomixer or a high pressure emulsifier.

As the polymerization initiator, a thermal polymerization initiator, a photopolymerization initiator, a radiation polymerization initiator, a radical polymerization initiator, an ionic polymerization initiator, etc. may be mentioned, and a water-soluble or oil-soluble radical polymerization initiator is preferred.

As the radical polymerization initiator, a common initiator such as an azo polymerization initiator, a peroxide polymerization initiator or a redox initiators is used depending on the polymerization temperature. As the radical polymerization initiator, an azo compound is particularly preferred, and when polymerization is carried out in an aqueous medium, a salt of an azo compound is more preferred. The polymerization temperature is preferably from 20 to 150°C.

At the time of polymerization of monomer components, a molecular weight modifier may be used. As the molecular weight modifier, an aromatic compound, a mercapto alcohol or a mercaptan is preferred, and an alkyl mercaptan is particularly preferred. The molecular weight modifier may, for example, be mercaptoethanol, n-octyl mercaptan, n-dodecyl mercaptan, t-dodecyl mercaptan, stearyl mercaptan, α-methylstyrene dimer (CH₂=C(Ph)CH₂C(CH₃)₂Ph, wherein Ph is a phenyl group), etc.

In a case where the monomer components include a monomer (c), and the monomer (c) contains a tertiary amino group (-NR⁵R⁶), it is preferred to convert the tertiary amino group in the copolymer (A) obtained by polymerization to an amine salt, whereby storage stability will be improved.

It is preferred to use e.g. an acid for conversion to an amine salt, and it is more preferred to use an acid having a dissociation constant or primary dissociation constant of at least 10⁻⁵. As the acid, hydrochloric acid, hydrobromic acid, sulfonic acid, nitric acid, phosphoric acid, acetic acid, formic acid, propionic acid or lactic acid is preferred, and acetic acid is more preferred.

Instead of converting the tertiary amino group to an amine salt, it may be converted to a quaternary ammonium salt (referred to also as conversion to a quaternary salt) by using methyl iodide, ethyl iodide, dimethyl sulfate, diethyl sulfate, benzyl chloride, trityl phosphate, methyl p-toluenesulfonic acid, etc.

### "Dilution medium"

The dilution medium may be composed solely of the alcohol (C), or may be a mixture of the alcohol (C) and other liquid media. As other liquid media, ones miscible with the alcohol (C) are preferred, and for example, water and a ketone-type solvent may be mentioned. One of these may be used alone, or two or more of them may be used in combination.

From the viewpoint of stability, the dilution medium is preferably the alcohol (C), or a mixture of the alcohol (C) and water.

The proportion of the alcohol (C) to the total amount of the dilution medium may be suitably set in consideration of e.g. the mass ratio of the alcohol (C) to water (the alcohol (C)/water) in the liquid repellent composition and is not particularly limited, but it is preferably from 60 to 100 mass%, more preferably from 70 to 100 mass%.

The proportion of the total amount of the alcohol (C) and water to the total amount of the dilution medium is preferably from 90 to 100 mass%, particularly preferably 100 mass%.

### <Production of liquid repellent molded product>

The liquid repellent composition is applied to a resin molded product and dried, whereby it is possible to obtain a liquid repellent molded product comprising the resin molded product and a coating film formed from the liquid repellent composition on its surface.

The resin molded product is not particularly limited, and may be in a sheet form or a stereoscopic form. A sheet-form resin molded product may, for example, be a film, etc. A stereoscopic resin molded product may, for example, be a container, a plate, etc.

The resin to constitute the resin molded product is not particularly limited, and may, for example, be a polyolefin resin such as polyethylene (PE) or polypropylene (PP), or a polyester resin such as polyethylene terephthalate (PET). The resin may be one having a filler such as a plasticizer added.

The resin molded product may have a single resin or a plurality of resins laminated. The surface of the resin molded product may be one subjected to corona treatment, etc.

The liquid repellent composition may be applied to a part of the surface of the resin molding or may be applied to the entire surface. The surface of the resin molded product to which the liquid repellent composition is applied, may be smooth, or may be uneven. In the present invention, even if the surface of the resin molded product is smooth, it is possible to apply the liquid repellent composition with excellent uniformity.

The application of the liquid repellent composition may be carried out by using various known coating apparatus. The coating apparatus may be a continuous coating apparatus capable of carrying out uniform coating continuously, or other coating apparatus. The continuous coating apparatus may, for example, be an offset printing machine, a flexographic printing machine, a gravure coater, a roll coater, a screen printing machine, a curtain coater, a knife coater, an air knife coater, a spray, etc. Other coating apparatus may, for example, be a dipping device, a spin coater, etc.

The application amount of the liquid repellent composition to the resin molded product is from 0.001 to 0.2 g/m², preferably from 0.003 to 0.2 g/m², more preferably from 0.003 to 0.19 g/m², further preferably from 0.003 to 0.18 g/m², as the amount of fluorine atoms.

When the content of fluorine atoms contributing to liquid repellency is at least the lower limit value in the above range, the liquid repellency of the resulting liquid repellent molded product will be excellent. When the content of fluorine atoms is at most the upper limit value in the above range, the cost will be excellent.

The application amount as the amount of fluorine atoms can be calculated from the application amount of the liquid repellent composition, and the mass ratio of fluorine atoms to the total solid content of the liquid repellent composition. Otherwise, it can be obtained also by analyzing the formed film by a known analytical method (e.g. the method disclosed in Analytical Chemistry Vol. 26 (1977), p.721).

The mass ratio of fluorine atoms to the total solid content in the liquid repellent composition can be calculated from the content of components containing fluorine atoms in the liquid repellent composition, and the proportion of fluorine atoms in the components.

Drying after coating is sufficient, so long as it is possible to remove the aqueous medium from the formed coating film, and the drying method is not particularly limited.

### <Advantageous effects>

By the method of producing a liquid repellent molded product of the present invention, it is possible to apply the liquid repellent composition of an aqueous system uniformly on the surface of a resin molded product which has a low surface tension. Therefore, even though the number of carbon atoms in the perfluoroalkyl group is at most 6, it is possible to obtain a liquid repellent molded product having excellent liquid repellency.

Heretofore, it has been generally considered to be difficult to dilute and disperse an aqueous emulsion in an organic solvent, since the surfactant to let an organic component be water-dispersed tends to no longer function effectively. However, in the present invention, surprisingly, even when the liquid repellent composition is prepared by diluting the aqueous liquid (I) with a large amount of the alcohol (C) as an organic solvent, an emulsion state can be maintained.

Therefore, it is possible that in advance, an aqueous liquid (I) containing the copolymer (A) at a concentration higher than in the liquid repellent composition is prepared, and in that state, storage or transportation is carried out, and at the time of use, it is diluted with a dilution medium containing the alcohol (C) to prepare the liquid repellent composition. The amount of the aqueous liquid (I) is less than the amount of the liquid repellent composition, whereby it is possible to reduce the load for the storage or the transportation.

Further, in the present invention, even without roughening the surface of the resin molded product, it is possible to secure sufficient liquid repellency. Further, excellent liquid repellency can be obtained simply by removing the aqueous medium after coating.

Heretofore, it has been proposed to impart liquid repellency by applying and fixing a fluorinated silane coupling agent to the surface of a resin molded product, but it is required to carry out curing at a high temperature for a long time in order to fix the fluorinated silane coupling agent. In the present invention, such curing at a high temperature for a long time is not required. Therefore, application to a resin molded product with a low softening temperature is possible, and further, it is possible to carry out coating and drying by a common continuous coating apparatus.

Further, application of the liquid repellent composition of the present invention is not limited to the production of a liquid repellent molded product, and it may be used for other applications, such as fibers, paper, nonwoven fabrics, woods, leathers, metals, concretes, stones, tiles, ceramics, bricks, etc.

### EXAMPLES

Now, the present invention will be described in detail with reference with Examples. However, the present invention is not limited by the following description.

The evaluation methods and materials used in the respective Examples are shown below.

### <Evaluation methods>

### (Stability of liquid repellent composition)

A liquid repellent composition after 1 hour from the preparation was visually observed and evaluated as follows.
○ (good): Two-layer separation or precipitation did not occur.
× (bad): Two-layer separation or precipitation occurred, and coating became difficult.

### (Coated surface uniformity)

After a liquid repellent composition was applied, the film surface was visually observed and evaluated as follows.
○ (good): The liquid repellent composition was uniformly applied to the film surface.
× (bad): The liquid repellent composition was repelled in such a state that the liquid repellent composition was not uniformly applied to the film surface.

### (Liquid repellency test 1)

At room temperature, on the coated surface (the surface having a liquid repellent composition applied and dried) of a liquid repellent film disposed on a horizontal plane, about 1 mL of soybean oil was dropped, and observed whether or not it became a sphere, whereby It was evaluated as follows.
○ (good): It became a sphere.
× (poor): It did not become a sphere.

### (Liquid repellency test 2)

A liquid repellency test was carried out in accordance with the method stipulated in JAPAN TAPPI Paper Pulp Test Method No. 68: 2,000 (Paper and paperboard - water repellency test method) except that dropping water was changed to soybean oil, and the evaluation standards were as shown below. At that time, the state of the soybean oil dropped on the coated surface of the liquid-repellent film was visually observed and evaluated as follows.
○ (good): After dropping, the soybean oil droplets slided down the treated surface.
× (bad): After dropping, the soybean oil droplets remained on the treated surface and did not slide down.

### <Materials used>

### (Monomers)

C6FMA: F(CF₂)₆CH₂CH₂OC(O)C(CH₃)=CH₂.
HEMA: 2-hydroxyethyl methacrylate.
3ED: triethylene glycol dimethacrylate.
DEAEMA: N,N-diethylaminoethyl methacrylate.
StA: stearyl acrylate.
MOI-BP: 2-[(3,5-dimethylpyrazolyl)carbonyl amino]ethyl methacrylate (manufactured by Showa Denko K.K., Karenz (registered trademark) MOI-BP).
VCM: Vinyl chloride.

### (Surfactants)

E430: polyoxyethylene oleyl ether (manufactured by Kao Corporation, ethylene oxide (EO) addition molar number: about 26 moles).
P204: ethylene oxide propylene oxide polymer (manufactured by NOF Corporation, PLONON (registered trademark) 204, the proportion of ethylene oxide is 40 mass%).
SFY465: ethylene oxide adduct of 2,4,7,9-tetramethyl-5-decyne-4,7-diol (EO addition molar number: 10).
SFY485: ethylene oxide adduct of 2,4,7,9-tetramethyl-5-decyne-4,7-diol (EO addition molar number: 30).
E40: EO adduct of acetylene glycol (manufactured by Kawaken Fine Chemicals Co., Ltd., ACETYLENOL (registered trademark) E40, EO average addition molar number: 4).

### (Other)

N-DoSH: n-dodecyl mercaptan.
DPG: dipropylene glycol.
VA-061: 2,2'-azobis[2-(2-imidazolin-2-yl)propane] (manufactured by Wako Pure Chemical Industries, Ltd.).
DAIB: dimethyl 2,2'-azobisisobutyrate.
PVA124: manufactured by Kuraray Co., Ltd., completely saponified polyvinyl alcohol.
Minex WOR: manufactured by Meisei Chemical Works, Ltd., penetration aid.

### <Production Example 1>

Into a 1 L glass container, 142.5 g of C6FMA, 20.9 g of HEMA, 22.5 g of DEAEMA, 1.6 g of 3ED, 312.6 g of acetone and 1.5 g of DAIB were charged, and nitrogen replacement was repeated 3 times. While stirring at a stirrer rotation speed of 350 rpm, polymerization was carried out at 65°C for 20 hours, to obtain a pale yellow fluorinated copolymer solution.

To this fluorinated copolymer solution, 800 g of ion-exchanged water and 11 g of acetic acid were added and mixed for 15 minutes. Under a reduced pressure condition, acetone was removed at 65°C to obtain a transparent light orange-colored aqueous liquid. To this aqueous liquid, ion-exchanged water was added to adjust the solid content concentration to 20 mass%, which was regarded as the aqueous liquid in Production Example 1.

From the amounts of raw materials used, the proportion of C6FMA in the solid content (200 g) in 1,000 g of the aqueous liquid in Production Example 1 was 152 g, and the proportion of fluorine atoms was calculated to be 87 g. Accordingly, the proportion of C6FMA units to the total solid content in the aqueous liquid was 76 mass%, and the proportion of fluorine atoms was about 43.5 mass%.

### <Production Example 2>

Into a 1 L glass beaker, 364.4 g of distilled water, 178 g of C6FMA, 7.5 g of E430, 2.4 g of P204, 1.0 g of SFY465, 1.0 g of SFY485, 16.9 g of StA, 2.2 g of HEMA, 7.2 g of MOI-BP, 0.5 g of N-DoSH and 72.3 g of DPG were charged to obtain a mixture. Then, the obtained mixture was held at 30°C by hot water bath and mixed for 20 minutes for pre-emulsification by means of a homomixer (manufactured by Tokushu Kika Kogyo Co., Ltd., TK Homo Mixer MK2). While maintaining the emulsion obtained by this pre-emulsification at 30°C, using a high pressure emulsifier (manufactured by APV Gaulin, LAB60-10TBS), emulsification was conducted under a condition of 40 MPa. The emulsion obtained by this emulsification was transferred to a 1 L autoclave and cooled to at most 20°C, whereupon the interior was replaced by nitrogen. Thereto, 0.7 g of VA-061, 0.5 g of acetic acid and 7 g of distilled water were added. Then, 36.4 g of gaseous VCM was added, followed by gently stirring for 30 minutes. After confirming that the pressure in the autoclave was lowered and being stable, polymerization was conducted for 10 hours by raising the temperature to 60°C with stirring, to obtain a milky white fluorinated copolymer emulsion.

To this fluorinated copolymer emulsion, 8.2 g of E40 was added, and then distilled water was added to adjust the solid content concentration to 30 mass%, which was regarded as the aqueous liquid (emulsion) in Production Example 2.

From the amounts of raw materials, the proportion of C6FMA in the solid content (300 g) in 1,000 g of the aqueous liquid in Production Example 2 was 218 g, and the proportion of fluorine atoms was calculated to be 125 g. Accordingly, the proportion of C6FMA units to the total solid content in the aqueous liquid was 73 mass%, and the proportion of fluorine atoms was calculated to be about 41.6 mass%.

### <Example 1>

At room temperature, 10 g of the aqueous liquid in Production Example 1 was diluted by 90 g of ethanol and thoroughly stirred to obtain a liquid repellent composition.

By means of a Mayer bar, this liquid repellent composition was applied on a non-stretched polypropylene (CPP) film so that the amount of the liquid repellent composition would be about 10 g/m². After the application, drying for 60 seconds was conducted in a lab oven at 100°C, to obtain a liquid repellent film (liquid repellent molded product).

With respect to the obtained liquid repellent composition and liquid repellent film, evaluations of the stability of the liquid repellent composition, the coated surface uniformity, and the liquid repellent test 1 were conducted. The results are shown in Table 1.

### <Examples 2 to 12, and Comparative Examples 1 to 12>

Preparation of a liquid repellent composition and production of a liquid repellent film were conducted in the same manner as in Example 1, except that the composition of the liquid repellent composition and the substrate to be coated with the liquid repellent composition were changed as described in Tables 1-3.

With respect to the obtained liquid repellent composition and liquid repellent film, evaluations of the stability of the liquid repellent composition, the coated surface uniformity, and one or both of the liquid repellency test 1 and the liquid repellency test 2, were conducted. The results are shown in Tables 1-3.

**[Table 1]**

| | | Example 1 | Comp. Example 1 | Example 2 | Example 3 | Comp. Example 2 | Example 4 | Comp. Example 3 | Example 5 | Example 6 | Comp. Example 4 |
|---|---|---|---|---|---|---|---|---|---|---|---|
| Coating liquid composition (g) | Aqueous liquid in Production Example 1 | 10 | 10 | 10 | 10 | 10 | 10 | 10 | 10 | 10 | 10 |
| | Ethanol | 90 | | 90 | 80 | | 90 | | 90 | 80 | |
| | PVA124 | | | | 10 | | | | | 10 | |
| | Water | | 90 | | | 90 | | 90 | | | 90 |
| | Total | 100 | 100 | 100 | 100 | 100 | 100 | 100 | 100 | 100 | 100 |
| Ratio (mass%) | F fluorine atoms | 0.87 | 0.87 | 0.87 | 0.87 | 0.87 | 0.87 | 0.87 | 0.87 | 0.87 | 0.87 |
| | B water | 8 | 98 | 8 | 8 | 98 | 8 | 98 | 8 | 8 | 98 |
| | C alcohol | 90 | 0 | 90 | 80 | 0 | 90 | 0 | 90 | 80 | 0 |
| C/F | | 104 | 0 | 104 | 92 | 0 | 104 | 0 | 104 | 92 | 0 |
| C/B | | 11.3 | 0.0 | 11.3 | 10.0 | 0.0 | 11.3 | 0.0 | 11.3 | 10.0 | 0.0 |
| Stability of coating liquid | | ○ | ○ | ○ | ○ | ○ | ○ | ○ | ○ | ○ | ○ |
| Substrate | | CPP | CPP | CPP primer treatment | CPP primer treatment | CPP primer treatment | LDPE | LDPE | LDPE primer treatment | LDPE primer treatment | LDPE primer treatment |
| Coated amount (g/m²) | Amount of coating liquid | 10.4 | Not measurable | 10.8 | 10.2 | Not measurable | 9.8 | Not measurable | 10.2 | 10.4 | Not measurable |
| | Amount of fluorine atoms | 0.0865 | - | 0.0899 | 0.0849 | - | 0.0815 | - | 0.0849 | 0.0865 | - |
| Evaluations | Uniformity of coated surface | ○ | × | ○ | ○ | × | ○ | × | ○ | ○ | × |
| | Liquid repellency test 1 | ○ | × | ○ | ○ | × | ○ | × | ○ | ○ | × |

**[Table 2]**

| | | Example 7 | Example 8 | Example 9 | Comp. Example 5 | Comp. Example 6 | Comp. Example 7 | Comp. Example 8 |
|---|---|---|---|---|---|---|---|---|
| Coating liquid composition (g) | Aqueous liquid in Production Example 2 | 10 | 10 | 10 | 10 | 10 | 10 | 10 |
| | Ethanol | 90 | 80 | 70 | 60 | 50 | | |
| | Minex WOR | | | | | | 0.3 | |
| | 1-hexanol | | | | | | | 0.5 |
| | Water | | 10 | 20 | 30 | 40 | 89.7 | 89.5 |
| | Total | 100 | 100 | 100 | 100 | 100 | 100 | 100 |
| Ratio (mass%) | F fluorine atoms | 1.25 | 1.25 | 1.25 | 1.25 | 1.25 | 1.25 | 1.25 |
| | B water | 7 | 17 | 27 | 37 | 47 | 97 | 97 |
| | C alcohol | 90 | 80 | 70 | 60 | 50 | 0 | 0 |
| C/F | | 72 | 64 | 56 | 48 | 40 | 0 | 0 |
| C/B | | 12.9 | 4.7 | 2.6 | 1.6 | 1.1 | 0.0 | 0.0 |
| Stability of coating liquid | | ○ | ○ | ○ | ○ | ○ | ○ | ○ |
| Substrate | | CPP | CPP | CPP | CPP | CPP | CPP | CPP |
| Coated amount (g/m²) | Amount of coating liquid | 10 | 10 | 10 | - | - | - | - |
| | Amount of fluorine atoms | 0.125 | 0.125 | 0.125 | - | - | - | - |
| Evaluations | Uniformity of coated surface | ○ | ○ | ○ | × | × | × | × |
| | Liquid repellency test 1 | ○ | - | - | - | - | × | × |
| | Liquid repellency test 2 | ○ | ○ | ○ | × | × | - | - |

**[Table 3]**

| | | Example 10 | Example 11 | Example 12 | Comp. Example 9 | Comp. Example 10 | Comp. Example 11 | Comp. Example 12 |
|---|---|---|---|---|---|---|---|---|
| Coating liquid composition (g) | Aqueous liquid in Production Example 2 | 10 | 10 | 10 | 10 | 10 | 10 | 10 |
| | Ethanol | 90 | 80 | 70 | 60 | 50 | | |
| | Minex WOR | | | | | | 0.3 | |
| | 1-hexanol | | | | | | | 0.5 |
| | Water | | 10 | 20 | 30 | 40 | 89.7 | 89.5 |
| | Total | 100 | 100 | 100 | 100 | 100 | 100 | 100 |
| Ratio (mass%) | F fluorine atoms | 1.25 | 1.25 | 1.25 | 1.25 | 1.25 | 1.25 | 1.25 |
| | B water | 7 | 17 | 27 | 37 | 47 | 97 | 97 |
| | C alcohol | 90 | 80 | 70 | 60 | 50 | 0 | 0 |
| C/F | | 72 | 64 | 56 | 48 | 40 | 0 | 0 |
| C/B | | 12.9 | 4.7 | 2.6 | 1.6 | 1.1 | 0.0 | 0.0 |
| Stability of coating liquid | | ○ | ○ | ○ | ○ | ○ | ○ | ○ |
| Substrate | | LDPE | LDPE | LDPE | LDPE | LDPE | LDPE | LDPE |
| Coated amount (g/m²) | Amount of coating liquid | 10 | 10 | 10 | - | - | - | - |
| | Amount of fluorine atoms | 0.125 | 0.125 | 0.125 | - | - | - | - |
| Evaluations | Uniformity of coated surface | ○ | ○ | ○ | × | × | × | × |
| | Liquid repellency test 1 | ○ | - | - | - | - | × | × |
| | Liquid repellency test 2 | ○ | ○ | ○ | × | × | - | - |

In Tables 1 to 3, "CPP primer treatment" is one having the following primer treatment applied to one surface of a CPP film, and a liquid repellent composition was applied to the primer treated surface.

Primer treatment: On a film, Nax PP primer (manufactured by Nippon Paint Co., Ltd.) was preliminarily applied by a glass rod, so that the solid content would be 1 g/m², and dried at 100°C for 60 seconds.

"LDPE" is a low density polyethylene film. "LDPE primer treatment" is one having the above primer treatment applied to one surface of a LDPE film.

"Ratio" represents the proportion (mass%) of each of fluorine atoms, water and the alcohol (C), based on the total amount (100 mass%) of the liquid repellent composition. "C/F" represents the mass ratio of the alcohol (C)/fluorine atoms in the liquid repellent composition, and "C/B" represents the mass ratio of the alcohol/water in the liquid repellent composition.

In "Coated amount", "Amount of liquid repellent composition" is a value calculated from the difference in mass as between before and after coating, and "Not measurable" indicates that the liquid repellent composition was repelled and could not be uniformly applied.

In "Coated amount", "Amount of fluorine atoms" is a value calculated from the amount of the applied liquid repellent composition, and the ratio of fluorine atoms to the total solid content of the aqueous liquid used.

In "Evaluations", the symbol "-" means that the evaluation was not conducted.

As shown in the above results, in each of Examples 1 to 12, the stability of the liquid repellent composition was good. Further, it was possible to uniformly apply the liquid repellent composition to a substrate, and liquid repellency of the obtained liquid repellent film was good.

On the other hand, in each of Comparative Examples 1 to 12 wherein the content of the alcohol (C) was less than 70 mass%, it was not possible to uniformly apply the liquid repellent composition on a substrate, and the liquid repellency of the obtained liquid repellent film was poor.

### <Test Example 1>

Preparation of a liquid repellent composition and production of a liquid repellent film were conducted in the same manner as in Example 1, except that as the dilution medium, instead of ethanol, the solvent shown in Table 4 was used.

Further, preparation of a liquid repellent film was conducted in the same manner as above, except that the substrate to be coated with the liquid repellent composition was changed to LDPE.

With respect to the obtained liquid repellent composition and liquid repellent film, evaluations of the stability of the liquid repellent composition and the liquid repellency test 1 were conducted. The results are shown in Table 4.

### <Test Example 2>

Preparation of a liquid repellent composition and production of a liquid repellent film were conducted in the same manner as in Example 7, except that as the dilution medium, instead of ethanol, the solvent shown in Table 5 was used.

Further, preparation of a liquid repellent film was conducted in the same manner as above, except that the substrate to be coated with the liquid repellent composition was changed to LDPE.

With respect to the obtained liquid repellent composition and liquid repellent film, evaluations of the stability of the liquid repellent composition and the liquid repellency test 1 were conducted. The results are shown in Table 5.

**[Table 4]**

| | Aqueous liquid in Production Example 1 | | |
|---|---|---|---|
| | Stability of coating liquid | Liquid repellency test 1 | |
| | | CPP | LDPE |
| Methanol | ○ | ○ | ○ |
| Ethanol | ○ | ○ | ○ |
| 1 -Propanol | ○ | ○ | ○ |
| t-Butanol | ○ | ○ | ○ |
| n-Pentanol | × | - | - |
| n-Hexanol | × | - | - |
| MEK | × | - | - |
| Toluene | × | - | - |
| Ethyl acetate | × | - | - |

**[Table 5]**

| | Aqueous liquid in Production Example 2 | | |
|---|---|---|---|
| | Stability of coating liquid | Liquid repellency test 1 | |
| | | CPP | LDPE |
| Methanol | ○ | ○ | ○ |
| Ethanol | ○ | ○ | ○ |
| 1-Propanol | ○ | ○ | ○ |
| t-Butanol | ○ | ○ | ○ |
| n-Pentanol | × | - | - |
| n-Hexanol | × | - | - |
| MEK | × | - | - |
| Toluene | × | - | - |
| Ethyl acetate | × | - | - |

As shown in the above results, in the case of using a C₁₋₄ alcohol as the dilution medium, the stability of the liquid repellent composition was good. Further, it was possible to uniformly apply the liquid repellent composition to a substrate, and liquid repellency of the obtained liquid repellent film was good.

Whereas, in the case of using an alcohol with more than 5 carbon atoms or a solvent other than an alcohol as the dilution medium, the stability of the liquid repellent composition was poor.

## Claims

1. A method for producing a liquid repellent molded product, which comprises applying a liquid repellent composition comprising a fluorinated copolymer having structural units based on a monomer having a C₄₋₆ perfluoroalkyl group, water and a C₁₋₄ alcohol, to a resin molded product, and which is **characterized in that**
the content of the alcohol is from 70 to 99.9 mass% based on 100 mass% of the liquid repellent composition, and
the application amount of the liquid repellent composition to the resin molded product is from 0.001 to 0.2 g/m² as the amount of fluorine atoms.

2. The method for producing a liquid repellent molded product according to Claim 1, wherein the mass ratio of the alcohol to water (the alcohol/water) is from 2 to 2,000.

3. The method for producing a liquid repellent molded product according to Claim 1 or 2, wherein as the alcohol, at least one member selected from the group consisting of methanol, ethanol, 1-propanol and 2-propanol, is contained.

4. The method for producing a liquid repellent molded product according to any one of Claims 1 to 3, wherein the mass ratio of the alcohol to fluorine atoms (the alcohol/fluorine atoms) in the liquid repellent composition is from 15 to 10,000.

5. The method for producing a liquid repellent molded product according to any one of Claims 1 to 4, wherein the content of the fluorinated copolymer is at least 0.008 mass% based on 100 mass% of the liquid repellent composition.

6. The method for producing a liquid repellent molded product according to any one of Claims 1 to 5, wherein the liquid repellent composition is prepared by diluting an aqueous liquid having the fluorinated copolymer dispersed or dissolved in an aqueous medium containing water, with a dilution medium containing the alcohol.

7. The method for producing a liquid repellent molded product according to any one of Claims 1 to 6, wherein the monomer is an acrylate, a methacrylate or an acrylate with its α-position substituted by a halogen atom, which has the above-mentioned perfluoroalkyl group.

8. The method for producing a liquid repellent molded product according to any one of Claims 1 to 7, wherein the monomer is a compound represented by the following formula (4):
R^{F}-(CH₂)ₚOC(O)CR=CH₂ (4)
wherein R^{F} is a C₄₋₆ perfluoroalkyl group, p is an integer of from 1 to 4, and R is a hydrogen atom, a methyl group or a chlorine atom.

9. The method for producing a liquid repellent molded product according to any one of Claims 1 to 8, wherein the resin molded product is a polypropylene film or a polyethylene film.

10. A liquid repellent composition comprising a fluorinated copolymer having structural units based on a monomer having a C₄₋₆ perfluoroalkyl group, water and a C₁₋₄ alcohol, **characterized in that** the content of the alcohol is from 70 to 99.9 mass%, based on 100 mass% of the liquid repellent composition.

11. The liquid repellent composition according to Claim 10, wherein the mass ratio of the alcohol to water (the alcohol/water) is from 2 to 2,000.

12. The liquid repellent composition according to Claim 10 or 11, wherein the mass ratio of the alcohol to fluorine atoms (the alcohol/fluorine atoms) in the liquid repellent composition is from 15 to 10,000.

13. The liquid repellent composition according to any one of Claims 10 to 12, wherein the content of the fluorinated copolymer is at least 0.008 mass% based on 100 mass% of the liquid repellent composition.

14. The liquid repellent composition according to any one of Claims 10 to 13, wherein the monomer is an acrylate, a methacrylate or an acrylate with its α-position substituted by a halogen atom, which has the above-mentioned perfluoroalkyl group.

15. A method for producing the liquid repellent composition as defined in any one of Claims 10 to 14, **characterized by** diluting an aqueous liquid having the fluorinated copolymer dispersed or dissolved in an aqueous medium containing water, with a dilution medium containing the alcohol.

## Patentansprüche

1. Verfahren zur Herstellung eines flüssigkeitsabweisenden Formprodukts, welches das Aufbringen einer flüssigkeitsabweisenden Zusammensetzung, umfassend ein fluoriertes Copolymer mit Struktureinheiten auf der Basis eines Monomers mit einer C₄₋₆ Perfluoralkylgruppe, Wasser und einen C₁₋₄ Alkohol, auf ein Harzformprodukt umfasst, und das **dadurch gekennzeichnet ist, dass**
der Gehalt des Alkohols von 70 bis 99,9 Massen%, bezogen auf 100 Massen% der flüssigkeitsabweisenden Zusammensetzung, beträgt und
die Auftragungsmenge der flüssigkeitsabweisenden Zusammensetzung auf das Harzformprodukt von 0,001 bis 0,2 g/m² als die Menge an Fluoratomen beträgt.

2. Verfahren zur Herstellung eines flüssigkeitsabweisenden Formprodukts nach Anspruch 1, wobei das Massenverhältnis des Alkohols zum Wasser (Alkohol/Wasser) von 2 bis 2.000 beträgt.

3. Verfahren zur Herstellung eines flüssigkeitsabweisenden Formprodukts nach Anspruch 1 oder 2, wobei als Alkohol mindestens ein Mitglied, ausgewählt aus der Gruppe, bestehend aus Methanol, Ethanol, 1-Propanol und 2-Propanol, enthalten ist.

4. Verfahren zur Herstellung eines flüssigkeitsabweisenden Formprodukts nach einem der Ansprüche 1 bis 3, wobei das Massenverhältnis des Alkohols zu Fluoratomen (Alkohol/Fluoratome) in der flüssigkeitsabweisenden Zusammensetzung von 15 bis 10.000 beträgt.

5. Verfahren zur Herstellung eines flüssigkeitsabweisenden Formprodukts nach einem der Ansprüche 1 bis 4, wobei der Gehalt des fluorierten Copolymers mindestens 0,008 Massen%, bezogen auf 100 Massen% der flüssigkeitsabweisenden Zusammensetzung, beträgt.

6. Verfahren zur Herstellung eines flüssigkeitsabweisenden Formprodukts nach einem der Ansprüche 1 bis 5, wobei die flüssigkeitsabweisende Zusammensetzung durch Verdünnen einer wässrigen Flüssigkeit, welche das fluorierte Copolymer in einem wässrigen Medium, das Wasser enthält, dispergiert oder gelöst aufweist, mit einem den Alkohol enthaltenden Verdünnungsmedium hergestellt wird.

7. Verfahren zur Herstellung eines flüssigkeitsabweisenden Formprodukts nach einem der Ansprüche 1 bis 6, wobei das Monomer ein Acrylat, ein Methacrylat oder ein Acrylat, dessen α-Position durch ein Halogenatom substituiert ist, ist, das die vorstehende Perfluoralkylgruppe aufweist.

8. Verfahren zur Herstellung eines flüssigkeitsabweisenden Formprodukts nach einem der Ansprüche 1 bis 7, wobei das Monomer eine Verbindung ist, die durch die nachstehende Formel (4) dargestellt ist:
R^{F}-(CH₂)ₚOC(O)CR=CH₂ (4)
wobei R^{F} eine C₄₋₆ Perfluoralkylgruppe ist, p eine ganze Zahl von 1 bis 4 ist und R ein Wasserstoffatom, eine Methylgruppe oder ein Chloratom ist.

9. Verfahren zur Herstellung eines flüssigkeitsabweisenden Formprodukts nach einem der Ansprüche 1 bis 8, wobei das Harzformtprodukt ein Polypropylenfilm oder ein Polyethylenfilm ist.

10. Flüssigkeitsabweisende Zusammensetzung, umfassend ein fluoriertes Copolymer mit Struktureinheiten auf der Basis eines Monomers mit einer C₄₋₆ Perfluoralkylgruppe, Wasser und einen C₁₋₄ Alkohol, **dadurch gekennzeichnet, dass** der Gehalt des Alkohols von 70 bis 99,9 Massen%, bezogen auf 100 Massen% der flüssigkeitsabweisenden Zusammensetzung, beträgt.

11. Flüssigkeitsabweisende Zusammensetzung nach Anspruch 10, wobei das Massenverhältnis von Alkohol zu Wasser (Alkohol/Wasser) von 2 bis 2.000 beträgt.

12. Flüssigkeitsabweisende Zusammensetzung nach Anspruch 10 oder 11, wobei das Massenverhältnis des Alkohols zu Fluoratomen (Alkohol/Fluoratome) in der flüssigkeitsabweisenden Zusammensetzung von 15 bis 10.000 beträgt.

13. Die flüssigkeitsabweisende Zusammensetzung nach einem der Ansprüche 10 bis 12, wobei der Gehalt des fluorierten Copolymers mindestens 0,008 Massen%, bezogen auf 100 Massen% der flüssigkeitsabweisenden Zusammensetzung, beträgt.

14. Die flüssigkeitsabweisende Zusammensetzung nach einem der Ansprüche 10 bis 13, wobei das Monomer ein Acrylat, ein Methacrylat oder ein Acrylat, dessen α-Position durch ein Halogenatom substituiert ist, ist, das die vorstehende Perfluoralkylgruppe aufweist.

15. Verfahren zur Herstellung der flüssigkeitsabweisenden Zusammensetzung nach einem der Ansprüche 10 bis 14, **gekennzeichnet durch** Verdünnen einer wässrigen Flüssigkeit, welche das fluorierte Copolymer in einem wässrigen Medium, das Wasser enthält, dispergiert oder gelöst aufweist, mit einem den Alkohol enthaltenden Verdünnungsmedium.

## Revendications

1. Procédé pour produire un produit moulé repoussant les liquides, qui comprend l'application d'une composition repoussant les liquides comprenant un copolymère fluoré ayant des motifs structurels basés sur un monomère ayant un groupe perfluoroalkyle en C₄ à C₆, de l'eau et un alcool en C₁ à C₄, sur un produit moulé en résine, et qui est **caractérisé en ce que**
la teneur en l'alcool est de 70 à 99,9 % en masse basés sur 100 % en masse de la composition repoussant les liquides, et
la quantité d'application de la composition repoussant les liquides sur le produit moulé en résine est de 0,001 à 0,2 g/m² en tant que quantité d'atomes de fluor.

2. Procédé pour produire un produit moulé repoussant les liquides selon la revendication 1, dans lequel le rapport en masse de l'alcool à l'eau (alcool/ eau) est de 2 à 2 000.

3. Procédé pour produire un produit moulé repoussant les liquides selon la revendication 1 ou 2, dans lequel, en tant qu'alcool, est contenu au moins un membre choisi dans le groupe constitué par le méthanol, l'éthanol, le 1-propanol et le 2-propanol.

4. Procédé pour produire un produit moulé repoussant les liquides selon l'une quelconque des revendications 1 à 3, dans lequel le rapport en masse de l'alcool aux atomes de fluor (alcool/atomes de fluor) dans la composition repoussant les liquides est de 15 à 10 000.

5. Procédé pour produire un produit moulé repoussant les liquides selon l'une quelconque des revendications 1 à 4, dans lequel la teneur en le copolymère fluoré est d'au moins 0,008 % en masse basés sur 100 % en masse de la composition repoussant les liquides.

6. Procédé pour produire un produit moulé repoussant les liquides selon l'une quelconque des revendications 1 à 5, dans lequel la composition repoussant les liquides est préparée par dilution d'un liquide aqueux ayant le copolymère fluoré dispersé ou dissous dans un milieu aqueux contenant de l'eau, avec un milieu de dilution contenant l'alcool.

7. Procédé pour produire un produit moulé repoussant les liquides selon l'une quelconque des revendications 1 à 6, dans lequel le monomère est un acrylate, un méthacrylate ou un acrylate dont la position α est substituée par un atome d'halogène, qui a le groupe perfluoroalkyle susmentionné.

8. Procédé pour produire un produit moulé repoussant les liquides selon l'une quelconque des revendications 1 à 7, dans lequel le monomère est un composé représenté par la formule (4) qui suit :
R^{F}- (CH₂)ₚOC (O) CR=CH₂ (4)
dans laquelle R^{F} est un groupe perfluoroalkyle en C₄ à C₆, p est un entier de 1 à 4, et R est un atome d'hydrogène, un groupe méthyle ou un atome de chlore.

9. Procédé pour produire un produit moulé repoussant les liquides selon l'une quelconque des revendications 1 à 8, dans lequel le produit moulé en résine est un film de polypropylène ou un film de polyéthylène.

10. Composition repoussant les liquides comprenant un copolymère fluoré ayant des motifs structurels basés sur un monomère ayant un groupe perfluoroalkyle en C₄ à C₆, de l'eau et un alcool en C₁ à C₄, **caractérisée en ce que** la teneur en l'alcool est de 70 à 99,9 % en masse basés sur 100 % en masse de la composition repoussant les liquides.

11. Composition repoussant les liquides selon la revendication 10, dans laquelle le rapport en masse de l'alcool à l'eau (alcool/ eau) est de 2 à 2 000.

12. Composition repoussant les liquides selon la revendication 10 ou 11, dans laquelle le rapport en masse de l'alcool aux atomes de fluor (alcool/atomes de fluor) dans la composition repoussant les liquides est de 15 à 10 000.

13. Composition repoussant les liquides selon l'une quelconque des revendications 10 à 12, dans laquelle la teneur en le copolymère fluoré est d'au moins 0,008 % en masse basés sur 100 % en masse de la composition repoussant les liquides.

14. Composition repoussant les liquides selon l'une quelconque des revendications 10 à 13, dans laquelle le monomère est un acrylate, un méthacrylate ou un acrylate dont la position α est substituée par un atome d'halogène, qui a le groupe perfluoroalkyle susmentionné.

15. Procédé de production de la composition repoussant les liquides telle que définie dans l'une quelconque des revendications 10 à 14, **caractérisé par** la dilution d'un liquide aqueux ayant le copolymère fluoré dispersé ou dissous dans un milieu aqueux contenant de l'eau, avec un milieu de dilution contenant l'alcool.
